# EUROPÄISCHE PATENTSCHRIFT

(11) **EP 2 753 476 B1**
(45) Veröffentlichungstag und Bekanntmachung des Hinweises auf die Patenterteilung: **09.12.2015**
(21) Anmeldenummer: 12741014.0
(22) Anmeldetag: 02.08.2012
(51) Int. Cl.: B60C 1/00, C08K 3/04, C08K 3/36, C08K 5/54, C08L 7/00, C08L 9/00, B60C 9/02, C08K 5/098, C08L 61/12

(54) **FAHRZEUGLUFTREIFEN**
PNEUMATIC VEHICLE TYRE
PNEUMATIQUE DE VÉHICULE

(30) Priorität: 09.09.2011 DE 102011053451
(43) Veröffentlichungstag der Anmeldung: 16.07.2014
(73) Patentinhaber: Continental Reifen Deutschland GmbH, 30165 Hannover (DE)
(72) Erfinder: KRAMER, Thomas, 32049 Herford (DE); RECKER, Carla, 30167 Hannover (DE); KREYE, Marc, 38104 Braunschweig (DE); TORBRÜGGE, Thorsten, 30855 Langenhagen (DE)
(74) Vertreter: Finger, Karsten
(86) Internationale Anmeldenummer: PCT/EP2012/065086
(87) Internationale Veröffentlichungsnummer: WO 2013/034369

(56) Entgegenhaltungen:
- EP-A1- 1 932 688
- EP-A1- 2 233 317
- EP-A1- 2 258 765
- US-B1- 6 268 424
- US-B1- 6 401 781

## Beschreibung

Die Erfindung betrifft einen Fahrzeugluftreifen mit Radialkarkasse, der eine schwefelvernetzte Kautschukmischung, die 70 bis 100 phr (Gewichtsteile, bezogen auf 100 Gewichtsteile der gesamten Kautschuke in der Mischung) Naturkautschuk, bis zu 30 phr zumindest eines Polybutadiens, bis zu 15 phr zumindest eines Rußes, 20 bis 100 phr zumindest einer Kieselsäure, zumindest ein Silankupplungsagens und ein Haftsystem enthält, aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Fahrzeugluftreifen sind mit textilen oder metallischen Festigkeitsträgern, z. B. mit vermessingtem Stahlcord, verstärkt, um hohen mechanischen Beanspruchungen standzuhalten. Fahrzeugluftreifen weisen z. B. vermessingten Stahlcord im Gürtel, im Wulstkern und ggf. in der Karkasse auf. Um die Haltbarkeit des Gummi-Festigkeitsträger-Verbundes zu gewährleisten, soll die einbettende Kautschukmischung (Gummierungsmischung) eine gute Haftung zum Festigkeitsträger aufzeigen, wobei die Haftung durch Alterung und feuchte Lagerung nicht beeinträchtigt werden sollte. Die Vulkanisate sollten außerdem eine hohe dynamische und mechanische Beständigkeit und eine geringe Neigung zu Rissbildung und -wachstum aufweisen.

Die Haftung von Gummi zu textilen Festigkeitsträgern erfolgt über Imprägnierung (z. B. mit Resorcinformaldehydharzen in Kombination mit Kautschuklatices, RFL-Dip), im Direktverfahren mit Haftmischungen oder über Haftlösungen aus unvulkanisiertem Kautschuk mit Polyisocyanaten.

Die Gummi-Metall-Haftung kann durch Zusatz von so genannten Verstärkerharzen in der Gummierungsmischung positiv beeinflusst werden. Als Verstärkerharze sind z. B. Lignin, Phenol-Formaldehydharze mit Härter und Polymerharze bekannt. Zur Verbesserung der Gummi-Metall-Haftung ist es seit langem bekannt, Cobaltsalze und/oder ein Resorcin-Formaldehyd-Kieselsäuresystem oder ein Resorcin-Formaldehydsystem als Zusätze für die Gummierungsmischungen zu verwenden. Gummierungsmischungen mit Cobaltsalzen und einem Resorcin-Formaldehyd-Kieselsäuresystem sind z. B. aus KGK Kautschuk Gummi Kunststoffe Nr. 5/99, S. 322-328, aus GAK 8/1995, S. 536 und der EP-A-1 260 384 bekannt.

In bekannten Gummierungsmischungen werden als Füllstoffe Ruß und/oder Kieselsäure in folgenden Ruß-zu-Kieselsäure-Verhältnissen eingesetzt: 100 : 0 bis 80 : 20 sowie 20 : 80 bis 0 : 100.

Fahrzeugluftreifen gemäß dem Oberbegriff des Anspruchs 1 sind aus der DE 696 02 212 T2 bekannt. Eine Mischung mit Naturkautschuk, Kieselsäure, Silankupplungsagens und Haftsystem wird dort als Gummierungsmischung für den Gürtel eingesetzt, wobei an Gürtelgummierungsmischungen ganz andere Anforderungen beispielsweise hinsichtlich des Wärmeaufbaus gestellt werden als z. B. an Karkassgummierungen, die üblicherweise eine hohe Ermüdungsbeständigkeit aufweisen müssen, damit sie im Bereich der Seitenwand dem Einfedern des Reifens standhalten. Als Kieselsäure wird z. B. eine hoch dispergierbare Kieselsäure eingesetzt. Es soll erreicht werden, dass der Rollwiderstand des Reifens reduziert wird, ohne dass die sonstigen Eigenschaften, wie Haftung, Verschleißfestigkeit, Dauerhaltbarkeit insbesondere des Gürtels, oder die Herstellung des Reifens beeinträchtigt werden. Unter hoch dispergierbarer Kieselsäure wird dabei eine Kieselsäure verstanden, die zerfallen bzw. deagglomerieren kann und daher besonders gut und gleichmäßig in einer Elastomermatrix dispergiert (verteilt) werden kann. Diese besonders gute Verteilung kann durch elektronen- oder lichtmikroskopische Aufnahmen an Dünnschnitten nachgewiesen werden. Die von der Firma Evonik Industries vertriebenen Kieselsäuren Ultrasil^{®} VN2 und Ultrasil^{®} VN3 fallen nicht unter hoch dispergierbare Kieselsäuren. Die Verwendung von hoch dispergierbarer Kieselsäure soll die Materialermüdung der vulkanisierten Mischung auf ein Minimum reduzieren und damit das Risiko, dass sich die Mischung von Festigkeitsträgern löst, reduzieren. Die in der DE 696 02 212 T2 für Gürtelmischungen verwendeten hoch dispergierbaren Kieselsäuren weisen eine CTAB-Zahl ≤ 125 m²/g auf.

Der vorliegenden Erfindung liegt die Aufgabe zugrunde, Fahrzeugluftreifen bereit zu stellen, die sich durch eine verlängerte Lebensdauer auszeichnen.

Gelöst wird die Aufgabe erfindungsgemäß dadurch, dass die Kautschukmischung die Karkassgummierung ist und die Kieselsäure eine CTAB-Zahl gemäß ASTM D 3765 von mehr als 100 m²/g aufweist.

Es hat sich überraschenderweise herausgestellt, dass die Anordnung der Kautschukmischung als Karkassgummierung die Rissentstehung und das Risswachstum, insbesondere im Bereich des Lagenumschlages am Wulst, effektiv verhindern kann und dadurch die Lebensdauer des Reifens erheblich verbessert werden kann.

Die Karkassgummierung enthält 70 bis 100 phr Naturkautschuk (NR), wobei es sich um auf biochemischem Wege in Pflanzen synthetisiertes Polyisopren mit einem cis-1,4-Gehalt von mehr als 99 % handelt.

Als weiteren Kautschuk enthält die Karkassgummierung bis zu 30 phr, vorzugsweise 15 bis 25 phr, zumindest eines Polybutadiens (BR). Für besonders gute Haftungseigenschaften und eine gutes Verarbeitungsverhalten ist das Polybutadien eines mit einem cis-Gehalt von mehr als 95 Gew.-% oder ein funktionalisiertes Li-Polybutadien, z. B. BR1250 H von der Firma Nippon Zeon oder solche funktionalisierten Polybutadiene, wie sie in der EP 2 289 990 A1 beschrieben sind.

Die Karkassgummierung kann bis zu 15 phr zumindest eines Rußes enthalten. Sie kann demnach aber auch völlig frei von Ruß sein. Als Ruß-Typen kommen solche in Frage, die für Gummierungsmischungen üblich sind, beispielsweise Ruß des Typs N 326.

In der Karkassgummierung sind 20 bis 100 phr, vorzugsweise 40 bis 80 phr, zumindest einer Kieselsäure mit einer CTAB-Zahl von mehr als 100 m²/g enthalten. Es können demgemäß aber auch mehrere dieser Kieselsäuren nebeneinander in der Mischung vorliegen.

Um das Rissverhalten der Mischung weiter zu verbessern, hat es sich als vorteilhaft erwiesen, wenn die Kieselsäure eine CTAB-Zahl gemäß ASTM D 3765 von mehr als 130 m²/g aufweist, entsprechend einer großen spezifischen Oberfläche ohne die Poren, in die Cetyltrimethylammoniumbromid nicht hineingelangt.

Gemäß einer bevorzugten Weiterbildung der Erfindung kann die Lebensdauer des Reifens weiter verbessert werden, in dem als Kieselsäure eine hoch dispergierbare Kieselsäure verwendet wird. Unter hoch dispergierbaren Kieselsäuren werden in dieser Anmeldung solche Kieselsäuren zusammengefasst, die der Fachmann als gut und gleichmäßig in der Elastomermatrix dispergierbar kennt. Sie sind auf dem Markt als so genannte HD-Kieselsäuren z. B. als Ultrasil^{®} 7000 von der Firma Evonik Industries oder Zeosil^{®} 1165 MP von der Firma Rhodia erhältlich. Sie zeigen eine deutlich verbesserte Strukturstabilität bei Anlegung äußerer Kräfte und lassen sich daher gut in der Mischung verteilen.

Zur Verbesserung der Verarbeitbarkeit und zur Anbindung der Kieselsäure und anderer ggf. vorhandener polarer Füllstoffe an den Dienkautschuk werden Silan-Kupplungsagenzien in der Karkassgummierung eingesetzt. Die Silan-Kupplungsagenzien reagieren mit den oberflächlichen Silanolgruppen der Kieselsäure während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Evonik Industries) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive Performance Materials, USA, oder solche, die unter dem Namen VP Si 363 von der Firma Evonik Industries vertrieben werden.

Die Karkassgummierung kann neben Ruß und den hoch dispergierbaren Kieselsäuren auch noch weitere Füllstoffe enthalten, wie andere Kieselsäuren, Alumosilicate, Kreide, Stärke, Magnesiumoxid, Titandioxid oder Kautschukgele.

Die Karkassgummierung enthält ein Haftsystem. Je nachdem, ob die Karkassgummierung für textile oder metallische Festigkeitsträger eingesetzt werden soll, kommt entweder ein Haftsystcm für die Gummi-Textil-Haftung oder ein Haftsystem für die Gummi-Metall-Haftung zur Anwendung.

Gemäß einer bevorzugten Weiterbildung der Erfindung enthält die Karkasse metallische Festigkeitsträger. Metallische Festigkeitsträger werden beispielsweise in Nutzfahrzeugreifen als Karkassmaterial eingesetzt. Die Verbesserung des Rissverhaltens wirkt sich besonders vorteilhaft bei metallischen Festigkeitsträgern aus, da diese bei Haftungsverlust und Rissbildung verstärkt der Korrosion ausgesetzt sind, was die Lebensdauer des Fahrzeugluftreifens stark beeinträchtigt.

Wird die Karkassgummierung zur Gummierung von metallischen Festigkeitsträgern, insbesondere Stahlcord, eingesetzt, wird vorzugsweise ein Stahlcordhaftsystem auf der Basis von organischen Cobaltsalzen und Verstärkerharzen und mehr als 2,5 phr Schwefel verwendet.

Die organischen Cobaltsalze werden üblicherweise in Mengen von 0,2 bis 2 phr eingesetzt. Als Cobaltsalze können z. B. Cobaltstearat, -borat, -borat-alkanoate, -naphthenat, - rhodinat, -octoat, -adipat usw. verwendet werden. Als Verstärkerharze können Resorcin-Formaldehyd-Harze, beispielsweise Resorcin-Hexamethoxymethylmelamin-Harze (HMMM) oder Resorcin-Hexamethylentetramin-Harze (HEXA), oder modifizierte Phenolharze, beispielsweise Alnovol^{®}-Typen, eingesetzt werden. Von den Resorcin-Harzen können auch die Vorkondensate eingesetzt werden.

Gemäß eine vorteilhaften Weiterbildung der Erfindung enthält die Karkassgummierung weniger als 15 phr Prozesshilfsmittel, wobei hierunter Öle und andere viskositätssenkende Substanzen verstanden werden. Es kann sich bei diesen Prozesshilfsmitteln beispielsweise um Weichmacheröle oder Weichmacherharze handeln. Es hat sich herausgestellt, dass die Menge an Prozesshilfsmitteln, die für besseres Mischen, Extrudieren und Kalandrieren der Mischung zugesetzt werden, im Vergleich zu herkömmlichen Mischungen stark reduziert werden kann und die erfindungsgemäßen Mischungen trotzdem ein gutes Verarbeitungsverhalten bei moderater Viskosität und die Vulkanisate gute dynamischmechanische Eigenschaften aufweisen.

Als weitere Zusatzstoffe kann die Kautschukmischung weitere übliche Zuschlagstoffe in üblichen Gewichtsteilen, wie Vulkanisationsbeschleuniger, Vulkanisationsverzögerer, Zinkoxid und Alterungsschutzmittel, enthalten.

Die Herstellung der Karkassgummierung erfolgt auf herkömmliche Art und Weise, wobei zunächst in der Regel eine Grundmischung, die sämtliche Bestandteile mit Ausnahme des Vulkanisationssystems (Schwefel und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet.

Die Karkassgummierung kann zur Gummierung von textilen oder metallischen Karkassen eingesetzt werden. Vorzugsweise wird sie aber als Gummierung von einer Stahlcordkarkasse eines Nutzfahrzeugreifens eingesetzt.

Die Erfindung soll nun anhand von Vergleichs- und Ausführungsbeispielen, die in der Tabelle 1 zusammengefasst sind, näher erläutert werden.

Bei sämtlichen in den Tabellen enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V, die erfindungsgemäßen Karkassgummierungsmischung sind mit E gekennzeichnet. Die Mischung V(1) ist eine Karkassgummierung für Stahlkarkassen auf der Basis eines Ruß/Kieselsäure-Verschnitts mit wenig Kieselsäure; die Mischung V(2) ist eine rein rußhaltige Karkassgummierung für Stahlkarkassen. Die Mischung E(3) enthält demgegenüber nur Kieselsäure des Typs Ultrasil^{®} VN3 in einer Menge von 55 phr. Die Mischung E(4) enthält eine hoch dispergierbare Kieselsäure des Typs Zeosil^{®} 1165 MP in einer Menge von 60 phr. In den Mischungen wurden die Mengen an Schwefel und Beschleuniger so eingestellt, dass die Mischungen auf einen vergleichbaren Spannungswert bei 300 % Dehnung aufwiesen.

Die Mischungsherstellung erfolgte unter üblichen Bedingungen in mehreren Stufen in einem Labortangentialmischer. Aus sämtlichen Mischungen wurden Prüfkörper durch 20 minütige Vulkanisation unter Druck bei 160 °C hergestellt und mit diesen Prüfkörpern für die Kautschukindustrie typische Materialeigenschaften mit den im Folgenden angegebenen Testverfahren ermittelt.
- Shore-A-Härte bei Raumtemperatur gemäß DIN 53 505
- Rückprallelastizität bei Raumtemperatur und 70 °C gemäß DIN 53 512,
- Zugfestigkeit bei Raumtemperatur gemäß DIN 53 504
- Reißdehnung bei Raumtemperatur gemäß DIN 53 504
- Spannungswert (Modul) bei 50 und 300 % Dehnung bei Raumtemperatur gemäß DIN 53 504
- Bruchenergiedichte bestimmt im Zugversuch gemäß DIN 53 504, wobei die Bruchenergiedichte die bis zum Bruch erforderliche Arbeit, bezogen auf das Volumen der Probe, ist
- Verlustfaktor tan δₘₐₓ bei 55 °C als Maximalwert über den Dehnungssweep aus dynamisch-mechanischer Messung gemäß DIN 53 513

Ferner wurden mit die Mischungen bezüglich ihrer dynamischen Haltbarkeit mit Hilfe eines "Tear Fatigue Analyzer" (TFA) charakterisiert. Typische Prüfprozeduren sind z. B. in Kautschuk Gummi Kunststoffe 45 (12), 1064 ff (1992) beschrieben. Die vorliegenden Ergebnisse wurden mit einer Pulsbelastung von 30/5 Hz und dynamischen Dehnungen von 5 bis 8 % erzielt. In der Auswertung wurde der mögliche Energieeintrag für eine Lebensdauer von 100 kZyklen ermittelt.

Außerdem wurden Versuche zur Ermüdungsrissbeständigkeit als Anzahl der Lastwechsel bis zum Bruch einer hantelförmigen Probe unter einem sich ständig wiederholenden Dehnungszyklus mit einer Frequenz von 104 ± 8 min-1, bestimmt mit einem Monsanto Fatique to Failure Tester (abgekürzt: FTF) bei 68 % Dehnung und 23 °C durchgeführt.

Außerdem wurden Nutzfahrzeugreifen einer Dimension 315/70 R22,5 mit einer Stahlkarkasse mit den Mischungen V(1), V(2) und E(3) als Karkassgummierungsmischung versehen und die Reifenhaltbarkeit auf einem Innenprüfstand bei einer konstanten Umgebungstemperatur von 38 °C geprüft. Die typische Prüfprozedur beinhaltet eine stufenweise Erhöhung der Last bis zum Reifenausfall.

**Tabelle 1**

| **Bestandteile** | **Einheit** | **V(1)** | **V(2)** | **E(3)** | **E(4)** |
|---|---|---|---|---|---|
| Naturkautschuk | phr | 100 | 100 | 80 | 80 |
| Polybutadien^{a} | phr | - | - | 20 | 20 |
| Ruß N 326 | phr | 51 | 60 | - | - |
| Kieselsäure A^{b} | phr | 8 | - | 55 | - |
| Kieselsäure B^{c} | phr | - | - | - | 60 |
| Silankuplungsagens^{d} | phr | - | - | 8,5 | 9,3 |
| Prozesshilfsmittel | phr | 7 | 5 | 5 | 5 |
| Alterungsschutzmittel | phr | 2 | 1,8 | 4 | 4 |
| organisches Cobaltsalz | phr | 1,3 | 0,5 | 0,4 | 0,4 |
| Harz aus Resorcin und Formaldehydspender | phr | 2,6 | 4,6 | 5 | 5 |
| Zinkoxid | phr | 8 | 9,5 | 8 | 8 |
| Beschleuniger | phr | 1,6 | 1 | 1,4 | 1,5 |
| Schwefel | phr | 5,5 | 4,4 | 4.0 | 4,3 |

| **Eigenschaften** | | | | | |
|---|---|---|---|---|---|
| Shore A-Härte bei RT | Shore A | 73 | 72 | 74 | 78 |
| Rückprallelastizität bei RT | % | 44 | 42 | 45 | 41 |
| Rückprallelastizität bei 70°C | % | 60 | 62 | 56 | 53 |
| Zugfestigkeit bei RT | MPa | 20 | 20 | 23 | 22 |
| Reißdehnung bei RT | % | 387 | 384 | 538 | 495 |
| Spannungswert 50 % | MPa | 1,9 | 1,7 | 1,9 | 2,3 |
| Spannungswert 300 % | MPa | 17,8 | 15,9 | 12,6 | 13,4 |
| Bruchenergiedichte | J/cm³ | 27 | 36 | 51 | 45 |
| tan δₘₐₓ bei 55 °C | - | 0,138 | 0,142 | 0,142 | 0,154 |
| TFA-Energie bei 100 kcyklen | kPa | 61 | 145 | 150 | 165 |
| FTF-Energie bei 68 % Dehnung | kcyklen | 120 | 207 | 384 | >400 |
| Trommellaufzeit bis Ausfall | h | 190 | 223 | 258 | 263 |

| | | | | | |
|---|---|---|---|---|---|
| ^{a} high-cis Polybutadien ^{b} Ultrasil^{®} VN3, CTAB-Zahl = 165 m²/g, Evonik Industries, Deutschland ^{c}Zeosil^{®} 1165 MP, CTAB-Zahl = 155 m²/g, Rhodia, Deutschland ^{d} Silankupplungsagens auf Ruß im Gewichtsverhältnis 1:1, X 50-S^{®}, Evonik Industries, Deutschland | | | | | |

Aus den Werten für die Rissentstehung und das Risswachstum, die Haftung und die Trommellaufzeit wird ersichtlich, dass bei Einsatz der Mischung als Karkassgummierung eine deutlich verlängerte Lebensdauer des Reifens erzielt werden kann. Noch bessere Ergebnisse werden mit einer hoch dispergierbaren Kieselsäure mit einer CTAB-Zahl von 155 m²/g erzielt.

## Patentansprüche

1. Fahrzeugluftreifen mit Radialkarkasse, der eine schwefelvernetzte Kautschukmischung, die
- 70 bis 100 phr (Gewichtsteile, bezogen auf 100 Gewichtsteile der gesamten Kautschuke in der Mischung) Naturkautschuk,
- bis zu 30 phr zumindest eines Polybutadiens,
- bis zu 15 phr zumindest eines Rußes,
- 20 bis 100 phr zumindest einer Kieselsäure,
- zumindest ein Silankupplungsagens und
- ein Haftsystem enthält,
aufweist,
**dadurch gekennzeichnet, dass** die Kautschukmischung die Karkassgummierung ist und die Kieselsäure eine CTAB-Zahl gemäß ASTM D 3765 von mehr als 100 m²/g aufweist.

2. Fahrzeugluftreifen nach Anspruch 1, **dadurch gekennzeichnet, dass** das zumindest eine Polybutadien ausgewählt ist aus einem Polybutadien mit einem cis-Gehalt von mehr als 95 Gew.-% oder einem funktionalisierten Li-Polybutadien.

3. Fahrzeugluftreifen nach Anspruch 1 oder 2 nach zumindest einem der Ansprüche 1 bis 4, **dadurch gekennzeichnet, dass** sie 40 bis 80 phr der Kieselsäure enthält.

4. Fahrzeugluftreifen nach zumindest einem der Ansprüche 1 bis 3, **dadurch gekennzeichnet, dass** die Kieselsäure eine CTAB-Zahl gemäß ASTM D 3765 von mehr als 130 m²/g aufweist.

5. Fahrzeugluftreifen nach zumindest einem der Ansprüche 1 bis 4, **dadurch gekennzeichnet, dass** die Kieselsäure eine hoch dispergierbare Kieselsäure ist.

6. Fahrzeugluftreifen nach zumindest einem der Ansprüche 1 bis 5, **dadurch gekennzeichnet, dass** die Karkasse metallische Festigkeitsträger enthält.

7. Fahrzeugluftreifen nach Anspruch 6, **dadurch gekennzeichnet, dass** das Haftsystem ein Stahlcordhaftsystem auf der Basis von organischen Cobaltsalzen und Verstärkerharzen und mehr als 2,5 phr Schwefel ist.

8. Fahrzeugluftreifen nach zumindest einem der Ansprüche 1 bis 7, **dadurch gekennzeichnet, dass** die Kautschukmischung weniger als 15 phr Prozesshilfsmittel enthält.

9. Fahrzeugluftreifen nach zumindest einem der Ansprüche 1 bis 8, **dadurch gekennzeichnet, dass** er ein Nutzfahrzeugreifen ist.

## Claims

1. Pneumatic tire which has a radial carcass and which comprises a sulfur-crosslinked rubber mixture which comprises
- from 70 to 100 phr (parts by weight, based on 100 parts by weight of all of the rubbers in the mixture) of natural rubber,
- up to 30 phr of at least one polybutadiene,
- up to 15 phr of at least one carbon black,
- from 20 to 100 phr of at least one silica,
- at least one silane coupling agent and
- an adhesive system,
**characterized in that** the rubber mixture is the carcass rubber mixture and the silica has a CTAB number above 100 m²/g in accordance with ASTM D3765.

2. Pneumatic tire according to Claim 1, **characterized in that** the at least one polybutadiene is selected from a polybutadiene having more than 95% by weight cis content or from a functionalized Li-polybutadiene.

3. Pneumatic tire according to Claim 1 or 2, **characterized in that** it comprises from 40 to 80 phr of the silica.

4. Pneumatic tire according to at least one of Claims 1 to 3, **characterized in that** the silica has a CTAB number above 130 m²/g in accordance with ASTM D3765.

5. Pneumatic tire according to at least one of Claims 1 to 4, **characterized in that** the silica is a high-dispersibility silica.

6. Pneumatic tire according to at least one of Claims 1 to 5, **characterized in that** the carcass comprises metallic reinforcement.

7. Pneumatic tire according to Claim 6, **characterized in that** the adhesive system is a steel cord adhesive system based on organic cobalt salts and on reinforcing resins and more than 2.5 phr of sulfur.

8. Pneumatic tire according to at least one of Claims 1 to 7, **characterized in that** the rubber mixture comprises less than 15 phr of processing aid.

9. Pneumatic tire according to at least one of Claims 1 to 8, **characterized in that** it is a commercial-vehicle tire.

## Revendications

1. Pneu de véhicule à carcasse radiale, comprenant un mélange de caoutchouc réticulé au soufre, qui contient :
- 70 à 100 pce (parties en poids, pour 100 parties en poids de l'ensemble des caoutchoucs dans le mélange) de caoutchouc naturel,
- jusqu'à 30 pce d'au moins un polybutadiène,
- jusqu'à 15 pce d'au moins un noir de carbone,
- 20 à 100 pce d'au moins une silice,
- au moins un agent de couplage silane et
- un système adhésif,
**caractérisé en ce que** le mélange de caoutchouc est le caoutchoutage de la carcasse et la silice présente un indice CTAB selon ASTM D 3765 de plus de 100 m²/g.

2. Pneu de véhicule selon la revendication 1, **caractérisé en ce que** ledit au moins un polybutadiène est choisi parmi un polybutadiène ayant une teneur en cis de plus de 95 % en poids ou un Li-polybutadiène fonctionnalisé.

3. Pneu de véhicule selon la revendication 1 ou 2, **caractérisé en ce qu'**il contient 40 à 80 pce de la silice.

4. Pneu de véhicule selon au moins l'une quelconque des revendications 1 à 3, **caractérisé en ce que** la silice présente un indice CTAB selon ASTM D 3765 de plus de 130 m²/g.

5. Pneu de véhicule selon au moins l'une quelconque des revendications 1 à 4, **caractérisé en ce que** la silice est une silice hautement dispersible.

6. Pneu de véhicule selon au moins l'une quelconque des revendications 1 à 5, **caractérisé en ce que** la carcasse contient des renforts métalliques.

7. Pneu de véhicule selon la revendication 6, **caractérisé en ce que** le système adhésif est un système adhésif à câblé d'acier à base de sels de cobalt organiques et de résines renforçantes et plus de 2,5 pce de soufre.

8. Pneu de véhicule selon au moins l'une quelconque des revendications 1 à 7, **caractérisé en ce que** le mélange de caoutchouc contient moins de 15 pce d'adjuvant d'usinage.

9. Pneu de véhicule selon au moins l'une quelconque des revendications 1 à 8, **caractérisé en ce qu'**il s'agit d'un pneu de véhicule utilitaire.
